# EUROPÄISCHE PATENTSCHRIFT

(11) **EP 1 201 523 B1**
(45) Veröffentlichungstag und Bekanntmachung des Hinweises auf die Patenterteilung: **16.03.2005**
(21) Anmeldenummer: 01121883.1
(22) Anmeldetag: 12.09.2001
(51) Int. Cl.: B60T 13/14, B60T 8/26, B60T 13/68

(54) **Kraft-Rückführungs- und Druck-Ausgleichs-Bremssystem**
Brake system with pressure balancing and force feedback
Circuit de freinage avec l'équilibrage de la pression et force-feedback

(30) Priorität: 24.10.2000 US 695347
(43) Veröffentlichungstag der Anmeldung: 02.05.2002
(73) Patentinhaber: DEERE & COMPANY, Moline, Illinois 61265-8098 (US)
(72) Erfinder: Meyer, Douglas Gerard, Bettendorf, IA 52722 (US)
(74) Vertreter: Lau-Loskill, Philipp, Dipl.-Phys.

(56) Entgegenhaltungen:
- US-A- 4 898 078
- US-A- 5 226 694
- US-A- 6 142 582

## Beschreibung

Die Erfindung betrifft ein Bremssystem für ein Arbeitsfahrzeug, wobei das Bremssystem eine Druckquelle für hydraulische Flüssigkeit und ein Tandembremsventil enthält. Das Tandembremsventil besitzt einen ersten Flussregulierungsteil und einen zweiten Flussregulierungsteil sowie zwei durch die Betriebsperson zu betätigende Elemente zur Umschaltung des Tandembremsventils. Ein erster Bremskreis steht in Flüssigkeitsverbindung mit der Druckquelle und dem ersten Flussregulierungsteil des Tandemventils, wobei der erste Bremskreis mit einem ersten Bremsstellglied zur Bremsung des Fahrzeugs versehen ist und sich eine erste hydraulische Leitung zwischen dem ersten Bremsstellglied und dem ersten Flussregulierungsteil des Tandemventils erstreckt. Ein zweiter Bremskreis steht in Flüssigkeitsverbindung mit der Druckquelle und dem zweiten Flussregulierungsteil des Tandemventils, wobei der zweite Bremskreis mit einem zweiten Bremsstellglied zur Bremsung des Fahrzeugs versehen ist und sich eine zweite hydraulische Leitung zwischen dem zweiten Bremsstellglied und dem zweiten Flussregulierungsteil des Tandemventils erstreckt.

Vierradgetriebene Lader sind Gelenkarbeitsfahrzeuge, die eine frontseitig montierte Ladeschaufel zur Bewegung von Schüttgut besitzen. Vierradangetriebene Lader besitzen ein Tragwerk, welches aus einem vorderen Rahmenteil mit zwei Vorderrädern und einem hinteren Rahmenteil mit zwei Hinterrädern besteht. Die Vorder- und Hinterräder werden alle angetrieben und sind alle mit Bremsen versehen.

Das Bremssystem für einen vierradgetriebenen Lader besitzt ein linkes und ein rechtes Pedal. Beide Pedalen betätigen die Vorderradbremsen und die Hinterradbremsen. Wenn das linke Pedal gedrückt ist, wird normalerweise ein Entkupplungssignal an das Getriebe gesendet und das Getriebe ausgekuppelt. Die Bedienperson kann dann ihren rechten Fuß nutzen, um das Gaspedal zu betätigen, so dass der Motor beschleunigt und der Hydraulikflüssigkeitsfluss zu den Arbeitsgeräten zunimmt. Eine derartige zweifüßige Tätigkeit erspart Zykluszeit. Einige Bedienpersonen bevorzugen die Bedienung des Laders mit nur dem rechten Fuß.

Diese Bremssysteme können parallele Bremskreise für die Vorderrad- und Hinterradbremsen besitzen. Der Fluss der druckbeaufschlagten hydraulischen Flüssigkeit in diesen Kreisläufen kann durch ein Tandembremsventil gesteuert werden. Das Tandembremsventil besitzt einen ersten Flussregulierungsteil zur Kontrolle des Flusses der druckbeaufschlagten hydraulischen Flüssigkeit zu den Vorderradbremsen und einen zweiten Flussregulierungsteil zur Kontrolle des Flusses der hydraulischen Flüssigkeit zu den Hinterradbremsen. Jeder der Bremskreise kann mit einem hydraulischen Druckspeicher versehen sein, der den Druck in den Kreisläufen aufrechterhält, auch wenn die Druckquelle mit druckbeaufschlagter hydraulischer Flüssigkeit ausfällt. Ein Problem dieser Systeme ist, dass unterschiedlicher Druck in den Bremskreisen einen unterschiedlichen Verschleiß der Bremskomponenten verursacht. Zum Beispiel verschleißen die Vorderräder und Vorderradbremsbeläge schneller, wenn der hydraulische Druck im vorderen Bremskreis immer wieder höher ist als der hydraulische Druck im hinteren Bremskreis. US 4 898 078 A beschreibt den Oberbegriff des Anspruchs 1.

Die der Erfindung zugrunde liegende Aufgabe wird darin gesehen, ein Bremssystem der eingangs genannten Art derart auszubilden, dass einige oder alle der vorgenannten Probleme überwunden werden. Insbesondere sollen bei Ausfall der Druckquelle der hydraulische Druck für die Bremskreise aufrechterhalten und Druckverluste beschränkt werden, so dass auch im Falle eines Defektes einer der oben genannten Komponenten ein intaktes Bremssystem vorliegt. Des Weiteren sollen zueinander ausgeglichene Druckverhältnisse in den beiden Bremskreisen bereitgestellt werden, um einen unterschiedlichen Verschleiß der Bremskomponenten zu verhindern.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Bremssystem findet bevorzugt Anwendung bei einem mit einem Arbeitsgerät bestückten Arbeitsfahrzeug, welches ein Tragwerk, an dem sich Vorder- und Hinterräder befinden, enthält. Das Arbeitsfahrzeug ist mit einem Bremssystem versehen, welches ein linkes und ein rechtes Pedal besitzt. Das Bremssystem enthält zwei parallele Bremskreise zur Ansteuerung der Vorderrad- und Hinterradbremsen. Die Vorderradund Hinterradbremsen werden durch Betätigen des rechten oder linken Bremspedals angesteuert. Der erste Bremskreis besitzt eine erstes Bremsstellglied, eine erste hydraulische Leitung, einen ersten Flussregulierungsteil eines Tandembremsventils und einen ersten Speicher. Der zweite Bremskreis besitzt ein zweites Bremsstellglied, eine zweite hydraulische Leitung, einen zweiten Flussregulierungsteil des Tandembremsventils und einen zweiten Speicher. Der erste Bremskreis steuert den Einsatz der Vorderradbremsen und der zweite Bremskreis steuert den Einsatz der Hinterradbremsen.

Gemäß einer ersten bevorzugten Ausgestaltung der Erfindung erstreckt sich zwischen der ersten und zweiten hydraulischen Leitung eine als Ausgleichsleitung ausgebildete hydraulische Verbindungsleitung, um den hydraulischen Druck, der auf das erste und zweite Bremsstellglied einwirkt, auszugleichen. Die hydraulische Ausgleichsleitung ist mit einer Blende versehen, die den hydraulischen Flüssigkeitsfluss zwischen der ersten und der zweiten hydraulischen Leitung begrenzt, wenn eine der Leitungen ausfällt.

Gemäß einer zweiten bevorzugten Ausgestaltung der Erfindung ist ein hydraulischer Kraft-Rückführkreis hydraulisch zwischen der ersten und zweiten hydraulischen Leitung positioniert. Der Kraft-Rückführkreis enthält eine erste hydraulische Kraft-Rückführleitung, eine zweite hydraulische Kraft-Rückführleitung und ein hydraulisches Kraft-Rückführstellglied. Bei der ersten Rückführleitung handelt es sich um eine Verbindungsleitung, die sich zwischen der ersten und zweiten hydraulischen Leitung erstreckt. Die zweite Rückführleitung erstreckt sich von der ersten Rückführleitung zu dem Rückführstellglied. Das Rückführstellglied ist an dem Tandembremsventil montiert und versorgt die Bedienperson mit einer Rückführkraft, indem es der Pedalenbetätigung entgegenwirkt. Die erste Rückführleitung ist mit einem Wechselabsperrventil versehen, welches einen ersten Eingang, einen zweiten Eingang und einen Ausgang besitzt. Der erste Eingang steht in Flüssigkeitsverbindung zur ersten hydraulischen Leitung und der zweite Eingang steht in Flüssigkeitsverbindung mit der zweiten hydraulischen Leitung. Der Ausgang ist hydraulisch mit der zweiten Rückführleitung gekoppelt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.
Es zeigt:
- Fig. 1: eine Seitenansicht eines vierradgetriebenen Laders und
- Fig. 2: ein hydraulisches Schema des Bremssystems.

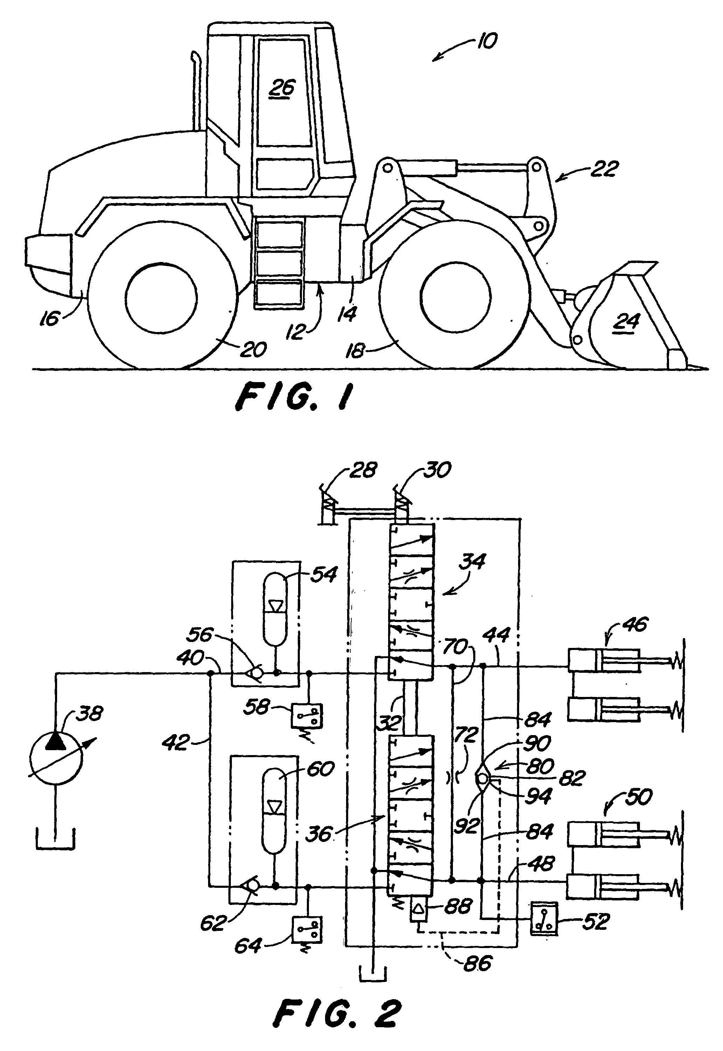

Das in Fig. 1 dargestellte Arbeitsfahrzeug 10 ist ein vierradgetriebener Lader. Obgleich die gegenwärtige Erfindung an einem vierradgetriebenen Lader angewandt beschrieben wird, kann diese in einer Vielzahl von Arbeitsfahrzeugen zur Anwendung kommen. Das Arbeitsfahrzeug 10 ist mit einem Tragwerk 12 versehen, welches einen vorderen Rahmenabschnitt 14 und einen hinteren Rahmenabschnitt 16 besitzt. Die Rahmenabschnitte 14 und 16 sind schwenkbar zueinander durch einen vertikalen Drehzapfen verbunden. Die zwei Rahmenabschnitte 14 und 16 sind zur Lenkung des Fahrzeugs 10 aufeinander abgestimmt. Der vordere Rahmenabschnitt 14 ist mit Vorderrädern 18 versehen und der hintere Rahmenabschnitt ist mit Hinterrädern 20 versehen. Das Fahrzeug 10 wird durch einen Verbrennungsmotor (nicht gezeigt) betrieben, der die Vorderräder 18 und Hinterräder 20 antreibt. Der innenliegende Verbrennungsmotor treibt des Weiteren hydraulische Pumpen an, zur Bereitstellung druckbeaufschlagter hydraulischer Flüssigkeit. Der vordere Rahmenabschnitt 14 ist zusätzlich mit einer Arbeitsvorrichtung versehen. Die Arbeitsvorrichtung ist eine Laderanordnung bestehend aus einem Ladergestänge 22 zur Handhabung einer Laderschaufel 24. Die Bedienung des Fahrzeugs 10 geschieht von der Fahrerkabine 26 aus.

Die Fahrerkabine 26 ist mit einem linken und einem rechten Bremspedal 28 und 30 versehen. Die Betätigung eines dieser Bremspedale löst alle Bremsen aus und bremst alle Räder 18 und 20. Die Bremspedale 28 und 30 sind operativ mit einem Tandembremsventil 32 gekoppelt. Das Bremsventil 32 besitzt einen ersten Flussregulierungsteil 34 und einen zweiten Flussregulierungsteil 36. Beide Flussregulierungsteile 34 und 36 sind miteinander verbunden und kennzeichnen so das Bremsventil 32 als Tandemventil. Der Verbrennungsmotor treibt eine hydraulische Pumpe an, die als Druckquelle 38 für hydraulische Flüssigkeit dient. Druckbeaufschlagte hydraulische Flüssigkeit aus der Druckquelle 38 wird durch Versorgungsleitungen 40 und 42 zum ersten Flussregulierungsteil 34 bzw. zum zweiten Flussregulierungsteil 36 geleitet.

Vom ersten Flussregulierungsteil 34 wird die druckbeaufschlagte Flüssigkeit durch eine erste hydraulische Leitung 44 zu einem ersten Bremsstellglied 46 geleitet. Das erste Bremsstellglied 46 besteht aus zwei hydraulischen Zylindern, die verwendet werden, um die rechte und linke Vorderbremse zu betätigen und damit die Vorderräder 18 des Fahrzeugs 10 zu bremsen. Gleichermaßen leitet der zweite Flussregulierungsteil 36 druckbeaufschlagte Flüssigkeit durch eine zweite hydraulische Leitung 48 zu einem zweiten Bremsstellglied 50. Die zweite hydraulische Leitung steht in Flüssigkeitsverbindung mit einem Drucksensorschalter 52, der zur Schaltung der externen Bremsanzeigelampen des Fahrzeugs 10 genutzt wird.

Ein erster hydraulischer Druckspeicher 54 und ein damit zusammenhängendes Absperrventil 56 ist hydraulisch an der hydraulischen Versorgungsleitung 40 zwischen der Druckquelle 38 und dem ersten Flussregulierungsteil 34 positioniert. Der erste Druckspeicher 54 erhält den Druck in dem ersten Bremskreis aufrecht, der durch den ersten Flussregulierungsteil 34, die erste hydraulische Leitung 44 und das erste Bremsstellglied 46 definiert ist. Ein erster Drucksensorschalter 58, der in Flüssigkeitsverbindung mit der hydraulischen Versorgungsleitung 40 steht, schaltet Warnlampen im Inneren der Fahrerkabine 26, wenn der hydraulische Druck im ersten Bremskreis niedrig ist. Ein zweiter hydraulischer Druckspeicher 60 und ein damit zusammenhängendes Absperrventil 62 ist hydraulisch zwischen der Druckquelle 38 und dem zweiten Flussregulierungsteil 36 positioniert. Der zweite Druckspeicher 60 erhält den Druck in dem zweiten Bremskreis aufrecht, der durch den zweiten Flussregulierungsteil 36, die zweite hydraulische Leitung 48 und das zweite Bremsstellglied 50 definiert ist. Ein zweiter Drucksensorschalter 64, der in Flüssigkeitsverbindung mit der hydraulischen Versorgungsleitung 42 steht, schaltet Warnlampen im Inneren der Fahrerkabine 26, wenn der hydraulische Druck im zweiten Bremskreis niedrig ist. Ein operativ mit den Pedalen 28 und 30 verbundener Kupplungsunterbrechungsschalter (nicht gezeigt) entkoppelt den Fahrzeugantrieb sobald die Bremspedalen betätigt werden.

Der Gebrauch eines parallelen ersten und zweiten Kreises mit einem Tandembremsventil ist Stand der Technik. Erfindungsgemäß wird hier eine Bremsdruck-Ausgleichsleitung 70 und ein Kraft-Rückführkreis 80, der ein Wechselabsperrventil 82 zwischen der ersten und zweiten hydraulischen Leitung 44 und 48 enthält, hinzugefügt. Die Druck-Ausgleichsleitung 70 ist mit einer Blende 72 versehen. Wenn der hydraulische Druck in der ersten hydraulischen Leitung 44 gegenüber dem Druck in der zweiten hydraulischen Leitung 48 höher ist, so wird der hydraulische Druck durch die Druck-Ausgleichsleitung 70 ausgeglichen. Wenn die hydraulische Leitung 48 ausfällt, so wird die Geschwindigkeit, mit der die hydraulische Flüssigkeit aus dem ersten Bremskreis in die ausgefallene zweite hydraulische Leitung 48 strömen kann, durch die Blende 72 beschränkt.

Der hydraulische Kraft-Rückführkreis 80 enthält eine erste hydraulische Kraft-Rückführleitung 84, eine zweite hydraulische Kraft-Rückführleitung 86 und ein hydraulisches Kraft-Rückführstellglied 88. Die erste hydraulische Kraft-Rückführleitung 84 erstreckt sich zwischen der ersten hydraulischen Leitung 44 und der zweiten hydraulischen Leitung 48. Die zweite hydraulische Kraft-Rückführleitung 86 erstreckt sich zwischen der ersten hydraulischen Kraft-Rückführleitung 84 und dem Kraft-Rückführstellglied 88. Das Kraft-Rückführstellglied 88 ist an das Tandemventil 32 montiert und liefert eine Rückführkraft, die von der Bedienperson als Widerstandskraft an den Pedalen 28 und 30 wahrgenommen werden kann.

Die erste hydraulische Kraft-Rückführleitung 84 ist mit einem Wechselabsperrventil 82 versehen. Das Wechselabsperrventil 82 besitzt einen ersten Eingang 90, der in Flüssigkeitsverbindung mit der ersten hydraulischen Leitung 44 steht, und einen zweiten Eingang 92, der in Flüssigkeitsverbindung mit der zweiten hydraulischen Leitung 48 steht. Das Wechselabsperrventil 82 ist des Weiteren mit einem Ausgang 94 versehen, der mit der zweiten hydraulischen Kraft-Rückführleitung 86 verbunden ist. Wenn die zweite hydraulische Leitung 48 ausfällt, wird das Wechselabsperrventil 82 durch den hydraulischen Druck verschoben und der zweite Eingang 92 geschlossen, wodurch das Ausströmen der hydraulischen Flüssigkeit vom ersten Bremskreis in die ausgefallene zweite hydraulische Leitung 48 vermieden wird. In jedem Fall wird stets druckbeaufschlagte Flüssigkeit aus der ersten hydraulischen Leitung 44 über den Ausgang 94 zur zweiten hydraulischen Kraft-Rückführleitung 86 gelangen, die das Kraft-Rückführstellglied 88 mit druckbeaufschlagter Flüssigkeit versorgt.

## Patentansprüche

1. Bremssystem für ein Arbeitsfahrzeug (10), mit einer Druckquelle (38) für hydraulische Flüssigkeit und einem Tandembremsventil (32), welches einen ersten Flussregulierungsteil (34) und einen zweiten Flussregulierungsteil (36) sowie zwei durch die Betriebsperson zu betätigende Elemente (28, 30) zur Verschiebung des Tandembremsventils (32) besitzt, des Weiteren mit einem ersten Bremskreis, der in Flüssigkeitsverbindung mit der Druckquelle (38) und dem ersten Flussregulierungsteil (34) des Tandembremsventils (32) steht, wobei der erste Bremskreis mit einem ersten Bremsstellglied (46) zur Bremsung des Fahrzeugs versehen ist und sich eine erste hydraulische Leitung (44) zwischen dem ersten Bremsstellglied (46) und dem ersten Flussregulierungsteil (34) des Tandembremsventils (32) erstreckt, des Weiteren mit einem zweiten Bremskreis, der in Flüssigkeitsverbindung mit der Druckquelle und dem zweiten Flussregulierungsteil (36) des Tandembremsventils (32) steht, wobei der zweite Bremskreis mit einem zweiten Bremsstellglied (50) zur Bremsung des Fahrzeugs versehen ist und sich eine zweite hydraulische Leitung (48) zwischen dem zweiten Bremsstellglied (50) und dem zweiten Flussregulierungsteil (36) des Tandembremsventils (32) erstreckt, **dadurch gekennzeichnet, dass** sich wenigstens eine hydraulische Verbindungsleitung zwischen der ersten hydraulischen Leitung (44) und der zweiten hydraulischen Leitung (48) erstreckt.

2. Bremssystem nach Anspruch 1, **dadurch gekennzeichnet, dass** die hydraulische Verbindungsleitung eine mit einer Blende (72) versehene Druck-Ausgleichsleitung (70) ist, die den Druck zwischen dem ersten und dem zweiten hydraulischen Stellglied (46, 50) ausgleicht.

3. Bremssystem nach Anspruch 1 oder 2, **dadurch gekennzeichnet, dass** ein hydraulischer Kraft-Rückführkreis vorgesehen ist, der die Bedienperson über das Tandembremsventil (32) und die durch die Bedienperson betätigten Elemente (28, 30) mit einer Rückführkraft versorgt, wobei der Kraft-Rückführkreis eine als hydraulische Verbindungsleitung ausgebildete, erste hydraulische Kraft-Rückführleitung (84) enthält, die sich zwischen der ersten hydraulischen Leitung (44) und der zweiten hydraulischen Leitung (48) erstreckt, und wobei der Kraft-Rückführkreis eine zweite hydraulische Kraft-Rückführleitung (86) enthält, die sich zwischen der ersten hydraulischen Kraft-Rückführleitung (84) und einem am Tandembremsventil (32) angeordneten hydraulischen Kraft-Rückführstellglied (88) erstreckt.

4. Bremssystem nach Anspruch 3, **dadurch gekennzeichnet, dass** in der ersten hydraulischen Kraft-Rückführleitung (84) ein Wechselabsperrventil (82) angeordnet ist, wobei das Wechselabsperrventil (82) einen ersten Eingang (90) besitzt, der mit der ersten hydraulischen Kraft-Rückführleitung (84) gekoppelt ist und in Flüssigkeitsverbindung mit der ersten hydraulischen Leitung (44) steht, wobei das Wechselabsperrventil (82) einen zweiten Eingang (92) besitzt, der mit der ersten hydraulischen Kraft-Rückführleitung (84) gekoppelt ist und in Flüssigkeitsverbindung mit der zweiten hydraulischen Leitung (48) steht, und wobei das Wechselabsperrventil (82) einen Ausgang (94) besitzt, der mit der zweiten hydraulischen Kraft-Rückführleitung (86) in Verbindung steht.

5. Bremssystem nach einem der Ansprüche 1 bis 4, **dadurch gekennzeichnet, dass** der erste Bremskreis mit einem ersten Druckspeicher (54) und der zweite Bremskreis mit einem zweiten Druckspeicher (60) versehen ist.

6. Bremssystem nach Anspruch 5, **dadurch gekennzeichnet, dass** der erste Druckspeicher (54) hydraulisch zwischen der Druckquelle (38) und dem ersten Flussregulierungsteil (34) des Tandembremsventils (32) positioniert ist, und der zweite Druckspeicher (60) hydraulisch zwischen der Druckquelle (38) und dem zweiten Flussregulierungsteil (36) des Tandembremsventils (32) positioniert ist.

7. Bremssystem nach einem der Ansprüche 1 bis 6, **dadurch gekennzeichnet, dass** das erste Bremsstellglied (46) ein Vorderräderpaar (18) und das zweite Bremsstellglied (50) ein Hinterräderpaar (20) des Fahrzeugs bremst.

## Claims

1. A brake system for a work vehicle (10), with a pressure source (38) for hydraulic fluid and a tandem brake valve (32) which has a first flow regulating part (34) and a second flow regulating part (36) as well as two elements (28, 30) for actuation by the operator, for displacing the tandem brake valve (32), further with a first brake circuit, which is in fluid communication with the pressure source (38) and the first flow regulating part (34) of the tandem brake valve (32), wherein the first brake circuit is provided with a first brake actuating member (46) for braking the vehicle and a first hydraulic line (44) extends between the first brake actuating member (46) and the first flow regulating part (34) of the tandem brake valve (32), further with a second brake circuit which is in fluid communication with the pressure source and the second flow regulating part (36) of the tandem brake valve (32), wherein the second brake circuit is provided with a second brake actuating member (50) for braking the vehicle and a second hydraulic line (48) extends between the second brake actuating member (50) and the second flow regulating part (36) of the tandem brake valve (32), **characterized in that** at least one hydraulic connecting line extends between the first hydraulic line (44) and the second hydraulic line (48).

2. A brake system according to claim 1, **characterized in that** the hydraulic connecting line is a pressure equalising line (70) provided with an orifice (72), which equalises the pressure between the first and second hydraulic actuating members (46, 50).

3. A brake system according to claim 1 or 2, **characterized in that** a hydraulic force feedback circuit is provided and supplies the operator with a feedback force through the tandem brake valve (32) and the elements (28, 30) actuated by the operator, wherein the force feedback circuit includes a first hydraulic force feedback line (84) in the form of a hydraulic connecting line, which extends between the first hydraulic line (44) and the second hydraulic line (48), and wherein the force feedback circuit includes a second hydraulic force feedback line (86) which extends between the first hydraulic force feedback line (84) and a hydraulic force feedback actuating member (88) arranged on the tandem brake valve (32).

4. A brake system according to claim 3, **characterized in that** a shuttle check valve (82) is arranged in the first hydraulic force feedback line (84), wherein the shuttle check valve (82) has a first input (90) which is coupled to the first hydraulic force feedback line (84) and is in fluid communication with the first hydraulic line (44), wherein the shuttle check valve (82) has a second input (92) which is coupled to the first hydraulic force feedback line (84) and is in fluid communication with the second hydraulic line (48), and wherein the shuttle check valve (82) has an output (94) which is connected to the second hydraulic force feedback line (86).

5. A brake system according to any of claims 1 to 4, **characterized in that** the first brake circuit is provided with a first pressure accumulator (54) and the second brake circuit is provided with a second pressure accumulator (60).

6. A brake system according to claim 5, **characterized in that** the first pressure accumulator (54) is located hydraulically between the pressure source (38) and the first flow regulating part (34) of the tandem brake valve (32) and the second pressure accumulator (60) is located hydraulically between the pressure source (38) and the second flow regulating part (36) of the tandem brake valve (32).

7. A brake system according to any of claims 1 to 6, **characterized in that** the first brake actuating member (46) brakes a front wheel pair (18) and the second brake actuating member (50) brakes a rear wheel pair (20) of the vehicle.

## Revendications

1. Système de freinage pour véhicule utilitaire (10), du type comprenant une source de pression (38) pour un liquide hydraulique et une soupape de freinage en tandem (32), et qui comporte une première portion régulatrice de débit (34) et une seconde portion régulatrice de débit (36), ainsi que deux éléments (38, 40), destinés à être actionnés par la personne en charge, en vue du déplacement de la soupape de freinage en tandem (32), ainsi qu'au surplus un premier circuit de freinage, qui est en communication fluidique avec la source de pression (38) et la première portion régulatrice de débit (34) de la soupape de freinage en tandem (32), le premier circuit de freinage étant prévu avec un premier organe de réglage de freinage (46) en vue du freinage du véhicule, et une première conduite hydraulique (44) s'étendant entre le premier organe de réglage de freinage (46) et la première portion régulatrice de débit (34) de la soupape de freinage en tandem (32), et, au surplus, un second circuit de freinage qui est en communication fluidique avec la source de pression et la seconde portion régulatrice de débit (36) de la soupape de freinage en tandem (32), le second circuit de freinage étant prévu avec un second organe de réglage de freinage (50), en vue du freinage du véhicule, et une seconde conduite hydraulique (48) s'étendant entre le second organe de réglage de freinage (50) et la seconde portion régulatrice de débit (36) de la soupape de freinage en tandem (32),
**caractérisé en ce qu'**au moins une conduite de liaison hydraulique s'étend entre la première conduite hydraulique (44) et la seconde conduite hydraulique (48).

2. Système de freinage selon la revendication 1, **caractérisé en ce que** la conduite de liaison hydraulique est une conduite d'équilibrage de pression (70) équipée d'un diaphragme (72), et qui équilibre la pression entre le premier et le second organe de réglage hydraulique (46, 50).

3. Système de freinage selon la revendication 1 ou 2, **caractérisé en ce qu'**il est prévu un circuit de feed-back de force hydraulique, qui fournit, à la personne en charge par la soupape de freinage en tandem (32), et aux éléments actionnés par la personne en charge (28, 30), une force de feed-back, le circuit de feed-back de force comportant une première conduite de feed-back de force hydraulique (84), sous forme d'une conduite de liaison hydraulique, qui s'étend entre la première conduite hydraulique (44) et la seconde conduite hydraulique (48), et le circuit de feed-back de force comportant une seconde conduite de feed -back de force hydraulique (86), qui s'étend entre la première conduite de feed-back de force hydraulique (84) et un organe de feed-back de force hydraulique (88) placé sur la soupape de freinage en tandem (32).

4. Système de freinage selon la revendication 3, **caractérisé en ce que** dans la première conduite de feed-back hydraulique (84) est placé un clapet d'arrêt double action (82), le clapet d'arrêt double action (82) comportant une première entrée (90) qui est connectée à la première conduite de feed-back de force hydraulique (84), et qui est en liaison fluidique avec la première conduite hydraulique (44), le clapet d'arrêt double action (82) comportant une seconde entrée (92) qui est connectée à la première conduite de feed-back de force hydraulique (84) et qui est en liaison fluidique avec la seconde conduite hydraulique (48), et le clapet d'arrêt double action (82) comportant une sortie (94) qui est en liaison avec la seconde conduite de feed-back de force hydraulique (86).

5. Système de freinage selon l'une quelconque des revendications 1 à 4, **caractérisé en ce que** le premier circuit de freinage est prévu avec un premier accumulateur de pression (54), et le second circuit de freinage est prévu avec un second accumulateur de pression (60).

6. Système de freinage selon la revendication 5, **caractérisé en ce que** le premier accumulateur de pression (54) est positionné hydrauliquement entre la source de pression (38) et la première portion régulatrice de débit (34) de la soupape de freinage en tandem (32), et le second accumulateur de pression (60) est positionné hydrauliquement entre la source de pression (38) et la seconde portion régulatrice de débit (36) de la soupape de freinage en tandem (32).

7. Système de freinage selon l'une quelconque des revendications 1 à 6, **caractérisé en ce que** le premier organe de réglage de freinage (46) freine une paire de roues avant (18), et le second organe de réglage de freinage (50) freine une paire de roues arrière (20) du véhicule.
